# EUROPEAN PATENT SPECIFICATION

(11) **EP 3 543 561 B1**
(45) Date of publication and mention of the grant of the patent: **11.05.2022**
(21) Application number: 19163627.3
(22) Date of filing: 19.03.2019
(51) Int. Cl.: F16H 57/022

(54) **GEAR DEVICE**
GETRIEBEVORRICHTUNG
DISPOSITIF D'ENGRENAGE

(30) Priority: 23.03.2018 JP 2018056624
(43) Date of publication of application: 25.09.2019
(73) Proprietor: Kabushiki Kaisha Tokai Rika Denki Seisakusho, Ohguchi-cho Niwa-gun Aichi 480-0134 (JP)
(72) Inventor: ANDO, Shinji, Niwa-gun, Aichi 480-0195 (JP)
(74) Representative: TBK

(56) References cited:
- EP-A1- 1 367 359
- EP-A1- 1 541 983
- JP-A- 2010 071 661
- US-A1- 2008 278 150
- US-A1- 2014 208 890

## Description

The following description relates to a gear device that includes a case and a gear rotatably coupled to the case. Such a gear device is known from JP2010071661A.

As one example of a gear device, JP 2007-30400 A discloses a rotation detection device that detects rotation of a rotary body through rotation of a gear. This type of rotation detection device includes, for example, a steering angle sensor that detects a rotation angle of a steering shaft (steering wheel) in a vehicle.

With the gear device, there is a need to set the distance between mating gears to a suitable value. However, a gear or a case of the gear may be expanded by heat or the like. When the distance is set in advance, the distance may not be able to sufficiently absorb such an expansion. To avoid such a situation, the distance between mating gears may be increased. However, increasing the distance between mating gears may cause backlash between the mating gears.

EP 1 367 359 A1 relates to a rotation detecting apparatus including a drive gear rotatably supported by a case and capable of rotating cooperatively with an object to be detected, driven gears which are rotatably supported by the case and brought in mesh with the drive gear, magnets provided at rotational center portions of the driven gears and having plane portions formed with N poles and S poles, a circuit board arranged at the case and capable of being connected to outside, magnetic reluctance elements attached to the circuit board and opposed to the plane portions of the magnets and an electronic circuit part for converting output signals of the magnetic reluctance element into rotational angle signals, wherein the magnets of the driven gears are formed with the N poles and the S poles by magnetizing the magnets after having been subjected to insert molding by a resin.

US 2008/278150 A1 relates to a similar device.

It is an objective of the following description to provide a gear device that reduces the distance between gears.

This object is solved by a gear device according to claim 1. Advantageous developments are subject-matters of the dependent claims.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a gear device includes a gear mechanism, a case, a first restriction, and a second restriction. The gear mechanism includes at least a first gear and a second gear. The case is configured to rotatably accommodate the gear mechanism and formed from a material having an expansion coefficient that differs from that of the gear mechanism. The first restriction restricts a position of the first gear relative to the case in a gear radial direction of the first gear. The second restriction restricts a position of a second gear relative to the case in a gear radial direction of the second gear. The first restriction is configured so that one of the gear mechanism and the case is located at an outer side of the first gear in the gear radial direction of the first gear. The second restriction is configured so that the other one of the gear mechanism and the case is located at an outer side of the second gear in the gear radial direction of the second gear.

In accordance with the present construction, for example, when the ambient temperature during usage changes from a low temperature to a high temperature, dimensions are changed in the case, the first gear, and the second gear by an amount that is in accordance with the corresponding expansion coefficient. In this case, when the gap between the case and the first gear changes by a large amount, the gap between the case and the second gear changes by a small amount. This offsets the dimensional changes of the case, the first gear, and the second gear caused by the expansion coefficient of each member. Accordingly, there is no need, compared to the related art, to increase the distance between the first gear and the second gear, and the distance can be kept short between the first gear and the second gear.

With the gear device, it is preferred that the expansion coefficient of the material forming the case be smaller than that of the gear mechanism. Accordingly, the case does not easily expand.

With the gear device, it is preferred that the first restriction be located proximate to a ring of the first gear, and the second restriction be located proximate to a ring of the second gear. Accordingly, restriction surfaces where the case and the first gear contact each other are located near the rings. This reduces the effects resulting from dimensional changes caused by expansion. This is further advantageous in that the distance can be reduced between the first gear and the second gear.

With the gear device, it is preferred that the first restriction include a first case projection and a first gear projection, and the second restriction include a second gear projection and a second case projection. The first case projection is formed on the case. The first gear projection is formed on the first gear and supporting the first case projection from an outer side in the gear radial direction of the first gear to restrict positions of the first gear and the case. The second gear projection is formed on the second gear. The second case projection is formed on the case and supporting the second gear projection from an outer side in the gear radial direction of the second gear to restrict positions of the second gear and the case. Accordingly, the projecting first restriction positions the first gear in the case, and the projecting second restriction positions the second gear in the case.

With the gear device, it is preferred that the first restriction include a first gear projection formed on the first gear and a second case projection formed on the case, and the second restriction include a second gear projection formed on the second gear and a second case projection formed on the case. Further, it is preferred that the first gear projection be located outward from the first case projection in the gear radial direction of the first gear, and the second case projection be located outward from the second gear projection in the gear radial direction of the second gear.

With the gear device, it is preferred that the first restriction include a first gear projection formed on the first gear and a second case projection formed on the case, and the second restriction include a second gear projection formed on the second gear and a second case projection formed on the case. Further, it is preferred that the first case projection be located outward from the first projection in the gear radial direction of the first gear, and the second gear projection be located outward from the second case projection in the gear radial direction of the second gear.

With the gear device, it is preferred that the first gear projection and the first case projection be at least partially annular and oppose each other, and the second gear projection and the second case projection be at least partially annular and oppose each other.

It is preferred that the gear device include a sensor configured to detect rotation in the gear mechanism. Accordingly, the gear device can detect the rotation angle of the gear mechanism with the sensor.

The gear device further includes a rotary body that is concentrically coupled to the first gear and configured to be rotated in cooperation with the first gear. The first gear is engaged with the second gear and rotated together with rotary body. Further, the second gear is rotated together with the first gear.

According to the present invention, the distance between the gears can be kept relatively short.

Other features and aspects will be apparent from the following detailed description, the drawings, and the claims.
Fig. 1 is a perspective view of a gear device in accordance with an embodiment.
Fig. 2 is a plan view showing the inner construction of the gear device.
Figs. 3A and 3B are cross-sectional views taken along line II-II in Fig. 2 schematically showing effect of the gear device.
Figs. 4A and 4B are cross-sectional views taken along line III-III in Fig. 2 schematically showing effect of the gear device.
Fig. 5 is a chart illustrating relationship between ambient temperature during usage and gap prior to application of a solution.
Fig. 6 is a chart illustrating relationship between the ambient temperature during usage and the gap subsequent to application of the solution.

Throughout the drawings and the detailed description, the same reference numerals refer to the same elements. The drawings may not be to scale, and the relative size, proportions, and depiction of elements in the drawings may be exaggerated for clarity, illustration, and convenience.

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

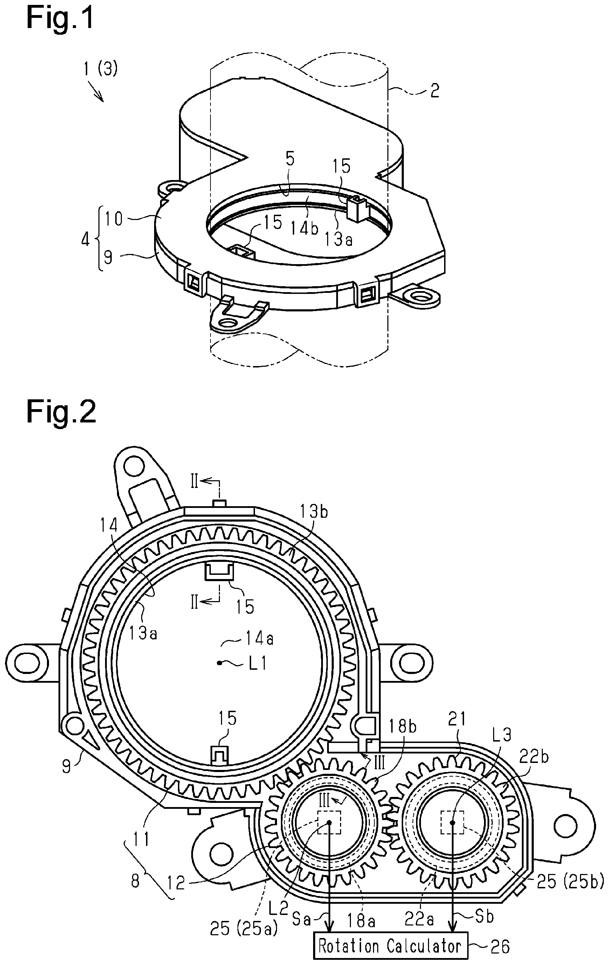

A gear device according to an embodiment will now be described with reference to Figs. 1 to 6.

As shown in Fig. 1, a gear device 1 is a rotation angle detection device 3 that is configured to detect a rotation angle (rotation amount) of a rotary body 2. The rotation angle detection device 3 in the present example includes a housing 4 that includes a through hole 5. In one example, the through hole 5 extends through a central portion of the housing 4. The rotary body 2 is inserted through the through hole 5. For example, the rotary body 2 is elongated and configured to be rotated about a longitudinal axis. Preferably, the rotation angle detection device 3 in the present example is configured to detect a rotation angle (rotation speed) of a vehicle steering shaft (steering wheel), which serves as the rotary body 2.

As shown in Fig. 2, the housing 4 includes a case 9 and a lid 10 (refer to Fig. 1). The case 9 is configured to rotatably accommodate a gear mechanism 8, and the lid 10 is configured to close an opening of the case 9. The gear mechanism 8 includes a first gear 11 and a second gear 12. The first gear 11 is configured to be rotated in cooperation with the rotary body 2, and the second gear 12 is engaged with the first gear 11. The first gear 11 includes a ring 13a and gear teeth 13b arranged at a radially outer side of the ring 13a. The ring 13a includes an inner circumferential surface 14b that defines a hole 14a. The rotary body 2 is rotatably inserted through the hole 14a of the ring 13a. The inner circumferential surface 14b of the ring 13a includes two projections 15 that engage the rotary body 2. This integrally rotates the first gear 11 and the rotary body 2 about an axis L1 of the rotary body 2.

The first gear 11 and the second gear 12 are spur gears. The case 9 in the present example is thin and has a low profile. The first gear 11 has a relatively large diameter, and the second gear 12 has a relatively small diameter. That is, the diameter of the first gear 11 is greater than that of the second gear 12. The second gear 12 includes a ring 18a and gear teeth 18b arranged at a radially outer side of the ring 18a. The ring 18a is rotatably accommodated in a recess 20 of the case 9. In other words, the ring 18a is rotatably accommodated in the recess 20 of the case 9. When the first gear 11 is rotated, the second gear 12 is rotated about an axis L2 of the ring 18a together with the first gear 11.

The second gear 12 is engaged with a third gear 21 that is rotated together with the second gear 12. The third gear 21 includes a ring 22a and gear teeth 22b arranged at a radially outer side of the ring 22a. The ring 22a is rotatably accommodated in a recess of the case 9 (not shown). In other words, the ring 22a is rotatably accommodated in the recess of the case 9 (not shown). The number of the gear teeth 18b of the second gear 12 differs from the number of the gear teeth 22b of the third gear 21. When the first gear 11 is rotated, the third gear 21 is rotated about an axis L3 of the ring 22a together with the first gear 11 and the second gear 12.

The gear device 1 includes a sensor unit 25 configured to detect rotation in the gear mechanism 8. The sensor unit 25 of the present example includes a first sensor 25a that is configured to detect the rotation of the second gear 12 and a second sensor 25b that is configured to detect the rotation of the third gear 21. Preferably, the first sensor 25a and the second sensor 25b may each be, for example, a magnetic sensor (Hall IC, MRE or the like). In such a case, the first sensor 25a and the second sensor 25b each include a magnet, which is arranged on the corresponding gear, and a magnetic sensor (sensing portion), which is arranged on the case 9. The magnetic sensor of the first sensor 25a detects the rotation of the second gear 12 (rotation of magnet) and generates a detection signal Sa. In the same manner, the magnetic sensor of the second sensor 25b detects the rotation of the third gear 21 (rotation of magnet) and generates a detection signal Sb.

The gear device 1 includes a rotation calculator 26 configured to calculate the rotation angle of the rotary body 2 based on the output from the sensor unit 25. The rotation calculator 26 in the present example is configured to detect the rotation angle of the rotary body 2 from the combination of the detection signal Sa of the first sensor 25a and the detection signal Sb of the second sensor 25b. The rotation calculator 26 detects, for example, the rotation angle of the rotary body 2, which is rotated leftward or rightward (first direction or second direction opposite to first direction) from a neutral position.

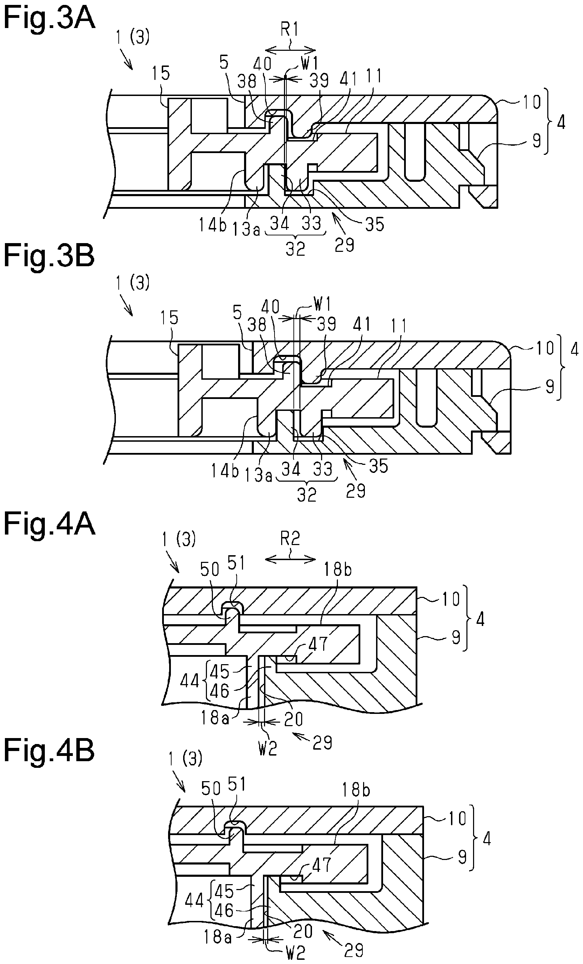

As shown in Figs. 3 and 4, the gear device 1 includes a restriction structure 29 that restricts the position of the gear mechanism 8 (in the present example, first gear 11 and second gear 12) in the case 9. In the positional restriction of the restriction structure 29 in the present example, one of the gear mechanism 8 and the case 9 is located at the outer side in a gear radial direction R1 (direction indicated by double-headed arrow in Fig. 3A) of the first gear 11, and the other one of the gear mechanism 8 and the case 9 is located at the outer side in a gear radial direction R2 (direction indicated by double-headed arrow in Fig. 4A) of the second gear 12.

The first gear 11 and the second gear 12 are formed from a material having a relatively "large" coefficient of expansion (coefficient of linear expansion), and the case 9 is formed from a material having a relatively "small" coefficient of expansion (coefficient of linear expansion). The expansion coefficient of the first gear 11 and the second gear 12 are greater than that of the case 9. The first gear 11 and the second gear 12 may be formed from the same material or from different materials.

As shown in Figs. 3A and 3B, the restriction structure 29 includes a first restriction 32 that restricts the position of the first gear 11 in the gear radial direction R1 (direction indicated by double-headed arrow in Fig 3A). The first restriction 32 includes a first case projection 34 and a first gear projection 33. The first case projection 34 is formed on an inner surface of the case 9 (for example, inner bottom surface of case 9). The first gear projection 33 is formed on a lower surface of the first gear 11 that opposes the inner surface of the case 9. In the first restriction 32, the surfaces of the first gear projection 33 and the first case projection 34 that contact each other serve as restriction surfaces that restrict the position of the first gear 11. The first gear projection 33 and the first case projection 34 extend about the axis L1 of the first gear 11. The first gear projection 33 is located in a recess 35 that extends along an inner circumferential surface of the case 9.

In the present example, the first gear projection 33 is located at an outer side in the gear radial direction R1, and the first case projection 34 is located at an inner side in the gear radial direction R1. That is, the annular first gear projection 33 is located at the outer side of the annular first case projection 34 in the gear radial direction R1, and a preset gap W1 extends between the first gear projection 33 and the first case projection 34. The gap W1 between the first gear projection 33 and the first case projection 34 is set to be relatively "small" when the ambient temperature during usage is low. The gap W1 is set to be relatively "large" when the ambient temperature during usage is high. Further, the set of the first gear projection 33 and the first case projection 34 (restriction surface) is located near the ring 13a in a planar direction of the first gear 11 (sideward direction in plane of Figs. 3A and 3B).

The width of the gap between the ring 13a and the first case projection 34 is set in advance to be large enough so that the ring 13a will not be excessively pressed against the first case projection 34 when the ambient temperature during usage changes. Further, the lid 10 and the first gear 11 are positioned by a projection 38 formed on an upper surface of the first gear 11 and a projection 39 formed on a lower surface of the lid 10. The projection 38 on the first gear 11 is loosely fitted in a recess 40 of the lid 10, and the projection 39 of the lid 10 is loosely fitted in a recess 41 of the first gear 11. The projections 38 and 39 and the recesses 40 and 41 extend about the axis L1 of the first gear 11.

As shown in Figs. 4A and 4B, the restriction structure 29 includes a second restriction 44 that restricts the position of the second gear 12 in the gear radial direction R2 (direction indicated by double-headed arrow in Fig. 4A). The second restriction 44 includes a second case projection 46 and a second gear projection 45. The second case projection 46 is formed on the inner surface of the case 9 (for example, inner bottom surface of case 9), and the second gear projection 45 is formed on a lower surface of the second gear 12 that opposes the inner surface of the case 9. In the present example, the ring 18a also serves as the second gear projection 45. In the second restriction 44, the surfaces of the second gear projection 45 and the second case projection 46 that contact each other serve as a restriction surfaces that restrict the position of the second gear 12. The second gear projection 45 and the second case projection 46 extend about the axis L2 of the second gear 12. The second case projection 46 is located in an annular recess 47 formed in the lower surface of the second gear 12.

In the present example, the second gear projection 45 is located at the inner side of the second gear 12 in the gear radial direction R2, and the second case projection 46 is located at the outer side of the second gear 12 in the gear radial direction R2. That is, the annular second case projection 46 is located at the outer side of the annular second gear projection 45 in the gear radial direction R2, and a preset gap W2 extends between the second case projection 46 and the second gear projection 45. The gap W2 between the second gear projection 45 and the second case projection 46 is set to be relatively "large" when the ambient temperature during usage is low, and relatively "small" when the ambient temperature during usage is high.

The lid 10 and the second gear 12 are positioned by loosely fitting a projection 50 that is formed on an upper surface of the second gear 12 in a recess 51 that is formed in the lower surface of the lid 10. The projection 50 and the recess 51 extend about the axis L1 of the first gear 11.

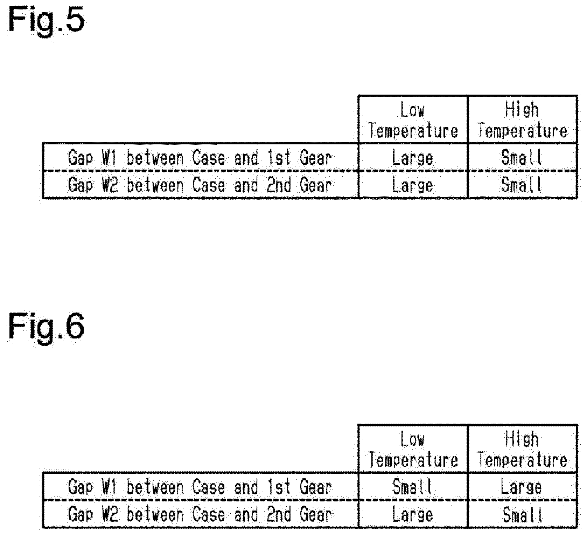

With reference to Figs. 5 and 6, the effects and advantages of the gear device 1 (restriction structure 29) in accordance with the present embodiment will now be described.

Fig. 5 is a chart illustrating changes in the gaps W1 and W2 when the first gear 11 and the second gear 12 are supported by the case 9 from the outer side in the gear radial direction R2. In this case, when the ambient temperature during usage is low, the gaps W1 and W2 are relatively "large". When the ambient temperature during usage changes to a high temperature, the gaps W1 and W2 are relatively "small". Accordingly, the gear teeth of the first gear 11 and the gear teeth of the second gear 12 need to be set in advance to have a wide pitch so that the gear teeth will not get caught with each other when a high temperature decreases the gaps W1 and W2. However, this increases backlash and lowers the accuracy of rotation angle detection.

Fig. 6 is a chart illustrating changes in the gaps W1 and W2 when the restriction structure 29 of the present example is employed. In this case, when the ambient temperature during usage is low, the gap W1 of the case 9 and the first gear 11 is relatively "small" and the gap W2 of the case 9 and the second gear 12 is relatively "large". When the ambient temperature during usage changes to a high temperature, the gap W1 changes to be relatively "large" and the gap W2 changes to be relatively "small". In this manner, the first gear 11 and the second gear 12 have opposite temperature characteristics to offset changes in the dimensions of members caused by linear expansion of the gear mechanism 8 or the case 9 when the temperature changes. This ensures the accuracy of the rotation angle detection.

In the present example, when the ambient temperature during usage changes from a low temperature to a high temperature, dimensions are changed in the case 9, the first gear 11, and the second gear 12 by an amount that is in accordance with the corresponding expansion coefficient. In this case, for example, if the gap W1 of the case 9 and the first gear 11 changes to relatively "large", the gap W2 of the case 9 and the second gear 12 changes to relatively "small". This offsets the dimensional changes of the case 9, the first gear 11, and the second gear 12 caused by the expansion coefficient of each member. Thus, there is no need to increase the distance between the first gear 11 and the second gear 12 to account for the dimensional changes due to ambient temperature changes, and the distance can be kept short between the first gear 11 and the second gear 12.

When the distance between the first gear 11 and the second gear 12 is reduced, backlash is decreased in the first gear 11 and the second gear 12. This reduces hysteresis of the output from the sensor unit 25 and also ensures the accuracy of the angle detection.

The case 9 is formed from a material having an expansion coefficient that is smaller than that of the gear mechanism 8 (first gear 11 and second gear 12). Thus, the case 9 does not easily expand.

The first restriction 32 (restriction structure 29) is located near the ring 13a of the first gear 11. Further, the second restriction 44 (restriction structure 29) is formed with the ring 18a of the second gear 12. Thus, the restriction surfaces where the case 9 and the first gear 11 contact each other are located near the rings 13a and 18a. Further, the restriction surfaces where the case 9 and the second gear 12 contact each other are located near the rings 13a and 18a. Accordingly, each restriction surface of the first restriction 32 and the second restriction 44 reduces the effects resulting from dimensional changes caused by expansion. This is further advantageous in that the distance can be reduced between the first gear 11 and the second gear 12.

The restriction structure 29 includes the first restriction 32, which includes the two projections on the case 9 and the first gear 11, and the second restriction 44, which includes the two projections on the case 9 and the second gear 12. Accordingly, the projecting first restriction 32 positions the first gear 11 in the case 9, and the projecting second restriction 44 positions the second gear 12 in the case 9.

The gear device 1 includes the sensor unit 25 that detects the rotation of the gear mechanism 8 (first gear 11 and second gear 12). Accordingly, the gear device 1 can detect the rotation angle of the gear mechanism 8 (first gear 11 and second gear 12) with the sensor unit 25.

The present embodiment may be modified as follows. The present embodiment and the following modifications can be combined as long as the combined modifications remain technically consistent with each other.

In the second restriction 44, the second gear projection 45 may be arranged at a location differing from the ring 18a and position the second gear 12 together with the second case projection 46.

The second restriction 44 may employ a structure in which the gear mechanism 8 is located at the outer side in the gear radial direction R2 and the case 9 is located at the inner side in the gear radial direction R2. Further, the first restriction 32 may employ a structure in which the case 9 is located at the outer side in the gear radial direction R1 and the gear mechanism 8 is located at the inner side in the gear radial direction R1. In the present example, the annular first gear projection 33 may be located at the inner side of the annular first case projection 34 in the gear radial direction R1, and the annular second case projection 46 may be located at the inner side of the annular second gear projection 45 in the gear radial direction R2.

The first gear projection 33 and the first case projection 34 do not have to extend throughout the entire circumference of the corresponding ring in the rotation direction and may be arranged in one or more parts of the circumference in the rotation direction as long as the first gear projection 33 and the first case projection 34 oppose each other. The second gear projection 45 and the second case projection 46 may be formed in the same manner. That is, the first gear projection 33, the first case projection 34, the first gear projection 33, and the first case projection 34 may be at least partially annular.

Each of the second gear 12 and the third gear 21 may be configured to engage the first gear 11.

The gears do not have to be spur gears and may be of any gear type.

The gear mechanism 8 may include three or more gears used for position restricting.

The sensor unit 25 does not have to be of a magnetic type and may be of a different detection type, such as an optical sensor.

The expansion coefficient includes, in addition to linear expansion coefficient, the coefficient of thermal expansion, the coefficient of volume expansion, and the like.

The restriction structure 29 may be arranged between the gear mechanism 8 and the lid 10.

The sensor unit 25 may be omitted from the gear device 1.

The gear device 1 is not limited to a rotation detection device and may be any device that includes the gear mechanism 8.

A gear device includes a gear mechanism (8), a case (9), a first restriction (32), and a second restriction (44). The gear mechanism includes a first gear and a second gear. The case rotatably accommodates the gear mechanism and formed from a material having an expansion coefficient differing from that of the gear mechanism. The first restriction (32) restricts a position of the first gear relative to the case in a gear radial direction of the first gear. The second restriction (44) restricts a position of a second gear relative to the case in a gear radial direction of the second gear. One of the gear mechanism and the case is located at an outer side of the first gear in the gear radial direction of the first gear, and the other one is located at an outer side of the second gear in the gear radial direction of the second gear.

## Claims

1. A gear device, comprising:
a gear mechanism (8) including at least a first gear (11) and a second gear (12);
a case (9) configured to rotatably accommodate the gear mechanism (8) and formed from a material having an expansion coefficient that differs from that of the gear mechanism (8);
a first restriction (32) that restricts a position of the first gear (11) relative to the case (9) in a gear radial direction of the first gear (11); and
a second restriction (44) that restricts a position of a second gear (12) relative to the case (9) in a gear radial direction of the second gear (12), wherein
the first restriction (32) includes:
a first case projection (34) formed on the case (9); and
a first gear projection (33) formed on the first gear and supporting the first case projection (34) from an outer side in the gear radial direction of the first gear to restrict positions of the first gear and the case (9), and a first preset gap (W1) extends between the first gear projection (33) and the first case projection (34) the expansion coefficient of the material forming the case (9) is smaller than that of the gear mechanism thereby resulting in that, the first preset gap (W1) is relatively small when the ambient temperature during usage is low and relatively large when the ambient temperature during usage is high, and
**characterized in that**
the second restriction (44) includes:
a second gear projection (45) formed on the second gear; and
a second case projection (46) formed on the case (9) and supporting the second gear projection (45) from an outer side in the gear radial direction of the second gear to restrict positions of the second gear and the case (9),
and a second preset gap (W2) extends between the second gear projection (45) and the second case projection (46),
and the second preset gap (W2) is set to be relatively large when the ambient temperature during usage is low, and relatively small when the ambient temperature during usage is high.

2. The gear device according to claim 1, **characterized in that**
the first restriction (32) is located proximate to a ring of the first gear, and
the second restriction (44) is located proximate to a ring of the second gear.

3. The gear device according to claim 1 or 2, **characterized by**:
a sensor configured to detect rotation in the gear mechanism (8).

4. The gear device according to any one of claims 1 to 3, further **characterized by**:
a rotary body (2) that is concentrically coupled to the first gear and configured to be rotated in cooperation with the first gear, wherein
the first gear is engaged with the second gear,
the first gear is rotated together with rotary body (2), and
the second gear is rotated together with the first gear.

## Patentansprüche

1. Getriebevorrichtung, mit:
einem Getriebemechanismus (8) mit mindestens einem ersten Zahnrad (11) und einem zweiten Zahnrad (12)
einem Gehäuse (9), das so konfiguriert ist, dass es den Getriebemechanismus (8) drehbar aufnimmt und aus einem Material mit einem Ausdehnungskoeffizienten ausgebildet ist, der sich von dem des Getriebemechanismus (8) unterscheidet;
einer ersten Beschränkung (32), die eine Position des ersten Zahnrads (11) relativ zu dem Gehäuse (9) in einer radialen Richtung des ersten Zahnrads (11) beschränkt; und
einer zweiten Beschränkung (44), die eine Position eines zweiten Zahnrads (12) relativ zu dem Gehäuse (9) in einer radialen Richtung des zweiten Zahnrads (12) beschränkt, wobei
die erste Beschränkung (32) umfasst:
einen ersten Gehäusevorsprung (34), der an dem Gehäuse (9) ausgebildet ist; und
einen ersten Zahnradvorsprung (33), der an dem ersten Zahnrad ausgebildet ist und den ersten Gehäusevorsprung (34) von einer Außenseite in der radialen Richtung des ersten Zahnrads stützt, um Positionen des ersten Zahnrads und des Gehäuses (9) zu begrenzen,
ein erster voreingestellter Spalt (W1) sich zwischen dem ersten Zahnradvorsprung (33) und dem ersten Gehäusevorsprung (34) erstreckt, und ein zweiter voreingestellter Spalt (W2) sich zwischen dem zweiten Zahnradvorsprung (45) und dem zweiten Gehäusevorsprung (46) erstreckt,
der Ausdehnungskoeffizient des das Gehäuse (9) bildenden Materials kleiner als der des Getriebemechanismus (8) ist, wodurch sich ergibt, dass der erste voreingestellte Spalt (W1) relativ klein ist, wenn die Umgebungstemperatur während der Benutzung niedrig ist, und relativ groß ist, wenn die Umgebungstemperatur während der Benutzung hoch ist, und
**dadurch gekennzeichnet, dass**
die zweite Beschränkung (44) umfasst:
einen zweiten Zahnradvorsprung (45), der an dem zweiten Zahnrad ausgebildet ist; und
einen zweiten Gehäusevorsprung (46), der an dem Gehäuse (9) ausgebildet ist und den zweiten Zahnradvorsprung (45) von einer Außenseite in der Radialrichtung des zweiten Zahnrads stützt, um Positionen des zweiten Zahnrads und des Gehäuses (9) zu begrenzen, und
ein zweiter voreingestellter Spalt (W2) sich zwischen dem zweiten Zahnradvorsprung (45) und dem zweiten Gehäusevorsprung (46 erstreckt), und
der zweite voreingestellte Spalt (W2) so eingestellt ist, dass er relativ groß ist, wenn die Umgebungstemperatur während der Benutzung niedrig ist, und relativ klein ist, wenn die Umgebungstemperatur während der Benutzung hoch ist.

2. Getriebevorrichtung nach Anspruch 1, **dadurch gekennzeichnet, dass**
die erste Beschränkung (32) in der Nähe eines Rings des ersten Zahnrads angeordnet ist, und
die zweite Beschränkung (44) in der Nähe eines Rings des zweiten Zahnrads angeordnet ist.

3. Getriebevorrichtung nach Anspruch 1 oder 2, **gekennzeichnet durch**:
einen Sensor, der konfiguriert ist, eine Drehung in dem Getriebemechanismus (8) zu erfassen.

4. Getriebevorrichtung nach einem der Ansprüche 1 bis 3, ferner **gekennzeichnet durch**:
einen Drehkörper (2), der konzentrisch mit dem ersten Zahnrad gekoppelt und so konfiguriert ist, dass er in Zusammenwirkung mit dem ersten Zahnrad gedreht wird, wobei
das erste Zahnrad mit dem zweiten Zahnrad in Eingriff ist,
das erste Zahnrad zusammen mit dem Rotationskörper (2) gedreht wird, und
das zweite Zahnrad zusammen mit dem ersten Zahnrad gedreht wird.

## Revendications

1. Dispositif d'engrenage comprenant :
un mécanisme d'engrenage (8) comprenant au moins un premier engrenage (11) et un second engrenage (12) ;
un carter (9) configuré pour loger, de manière rotative, le mécanisme d'engrenage (8) et formé à partir d'un matériau ayant un coefficient de dilatation qui diffère de celui du mécanisme d'engrenage (8) ;
une première restriction (32) qui limite une position du premier engrenage (11) par rapport au carter (9) dans une direction radiale d'engrenage du premier engrenage (11) ; et
une seconde restriction (44) qui limite une position d'un second engrenage (12) par rapport au carter (9) dans une direction radiale d'engrenage du second engrenage (12), dans lequel :
la première restriction (32) comprend :
une première saillie de carter (34) formée sur le carter (9) ; et
une première saillie d'engrenage (33) formée sur le premier engrenage et supportant la première saillie de carter (34) d'un côté externe dans la direction radiale d'engrenage du premier engrenage pour limiter les positions du premier engrenage et du carter (9), et un premier espace prédéterminé (W1) s'étend entre la première saillie d'engrenage (33) et la première saillie de carter (34), le coefficient de dilatation du matériau formant le carter (9) est inférieur à celui du mécanisme d'engrenage, ce qui se traduit donc par le fait que le premier espace prédéterminé (W1) est relativement petit lorsque la température ambiante pendant l'utilisation, est basse, et relativement important lorsque la température ambiante, pendant l'utilisation, est élevée, et
**caractérisé en ce que** :
la seconde restriction (44) comprend :
une seconde saillie d'engrenage (45) formée sur le second engrenage ; et
une seconde saillie de carter (46) formée sur le carter (9) et supportant la seconde saillie d'engrenage (45) d'un côté externe dans la direction radiale d'engrenage du second engrenage pour limiter les positions du second engrenage et du carter (9),
et un second espace prédéterminé (W2) s'étend entre la seconde saillie d'engrenage (45) et la seconde saillie de carter (46),
et le second espace prédéterminé (W2) est déterminé pour être relativement important lorsque la température ambiante, pendant l'utilisation, est basse, et relativement petit lorsque la température ambiante, pendant l'utilisation, est élevée.

2. Dispositif d'engrenage selon la revendication 1, **caractérisé en ce que** :
la première restriction (32) est positionnée à proximité d'une bague du premier engrenage, et
la seconde restriction (44) est positionnée à proximité d'une bague du second engrenage.

3. Dispositif d'engrenage selon la revendication 1 ou 2, **caractérisé par** :
un capteur configuré pour détecter la rotation dans le mécanisme d'engrenage (8).

4. Dispositif d'engrenage selon l'une quelconque des revendications 1 à 3, **caractérisé en outre par** :
un corps rotatif (2) qui est couplé, de manière concentrique, au premier engrenage et configuré pour être entraîné en rotation en coopération avec le premier engrenage, dans lequel :
le premier engrenage est mis en prise avec le second engrenage,
le premier engrenage est entraîné en rotation conjointement avec le corps rotatif (2), et
le second engrenage est entraîné en rotation conjointement avec le premier engrenage.
